# EUROPÄISCHE PATENTSCHRIFT

(11) **EP 2 454 792 B1**
(45) Veröffentlichungstag und Bekanntmachung des Hinweises auf die Patenterteilung: **23.05.2018**
(21) Anmeldenummer: 10729897.8
(22) Anmeldetag: 08.07.2010
(51) Int. Cl.: H02J 3/14

(54) **HAUSHALTSGERÄT UND VERFAHREN ZUM BETREIBEN EINES HAUSHALTSGERÄTS**
DOMESTIC APPLIANCE AND METHOD FOR OPERATING A DOMESTIC APPLIANCE
APPAREIL ÉLECTROMÉNAGER ET PROCÉDÉ POUR LE FAIRE FONCTIONNER

(30) Priorität: 17.07.2009 DE 102009027802
(43) Veröffentlichungstag der Anmeldung: 23.05.2012
(73) Patentinhaber: BSH Hausgeräte GmbH, 81739 München (DE)
(72) Erfinder: BOSEN, Peter, 93161 Sinzing (DE); HÄPP, Claudia, 80639 München (DE)
(86) Internationale Anmeldenummer: PCT/EP2010/059804
(87) Internationale Veröffentlichungsnummer: WO 2011/006828

(56) Entgegenhaltungen:
- WO-A1-97/37415
- DE-C- 394 190
- GB-A- 2 006 998
- GB-A- 2 426 878
- US-A1- 2003 177 776
- US-A1- 2004 254 688
- US-B1- 7 242 114

## Beschreibung

Die Erfindung betrifft ein Haushaltsgerät mit einer Steuereinrichtung und mit einer Spannungsversorgungseinheit zum Abgreifen einer Versorgungswechselspannung von einem elektrischen Versorgungsnetz, mit welcher das Haushaltsgerät versorgbar ist. Die Erfindung bezieht sich außerdem auf ein Verfahren zum Betreiben eines solchen Haushaltsgeräts.

Haushaltsgeräte werden bekanntlich von einem elektrischen Versorgungsnetz mit elektrischer Energie versorgt. Dazu benötigen die Haushaltsgeräte eine Spannungsversorgungseinheit, die zum Beispiel ein Netzteil umfassen kann. Mit einem Netzteil kann die abgegriffene Versorgungswechselspannung in eine Betriebsgleichspannung umgewandelt werden, mit welcher dann die Steuereinrichtung versorgt wird.

Vorliegend geht es um die Entlastung des öffentlichen elektrischen Versorgungsnetzes. Es ist Stand der Technik, Haushaltsgeräte mit einer Kommunikationsschnittstelle auszustatten. Über eine solche Kommunikationsschnittstelle kann ein Haushaltsgerät mit anderen im Haushalt befindlichen Haushaltsgeräten kommunizieren. Insbesondere können die Haushaltsgeräte solche Daten über die Kommunikationsschnittstelle empfangen, die Informationen über eine Gesamtleistungsaufnahme aller im Haushalt befindlichen Haushaltsgeräte beinhalten. Solche Daten können zum Beispiel von einem die Gesamtleistungsaufnahme erfassenden Messgerät gesandt werden. Dann können die Haushaltsgeräte ihre eigene Leistungsaufnahme derart gestalten, dass die Gesamtleistungsaufnahme einen vorbestimmten Grenzwert nicht überschreitet. Eine solche Lösung ist beispielsweise aus der Druckschrift EP 0 727 668 A1 bekannt.

Also ist im Stand der Technik eine Datenübertragung zwischen den Haushaltsgeräten erforderlich, um das elektrische Versorgungsnetz nicht zu überlasten. Dies erfordert darüber hinaus ein Messgerät, welches die Gesamtleistungsaufnahme aller im Haushalt befindlichen Haushaltsgeräte misst. Eine besondere Herausforderung besteht darin, denselben Erfolg, nämlich das elektrische Versorgungsnetz nicht zu überlasten, ohne Einsatz eines externen Messgeräts zu erzielen, wie auch ohne eine Datenkommunikation zwischen mehreren Haushaltsgeräten.

Es ist Aufgabe der Erfindung, ein Haushaltsgerät sowie ein Verfahren zum Betreiben eines Haushaltsgeräts zu schaffen, durch welche eine Entlastung eines elektrischen Versorgungsnetzes, an welches das Haushaltsgerät angeschlossen ist, ermöglicht wird.

Diese Aufgabe wird erfindungsgemäß durch ein Haushaltsgerät mit den Merkmalen gemäß Patentanspruch 1, wie auch durch ein Verfahren mit den Merkmalen gemäß Patentanspruch 8 gelöst. Vorteilhafte Ausführungen der Erfindung sind Gegenstand der abhängigen Ansprüche.

Ein erfindungsgemäßes Haushaltsgerät umfasst eine Steuereinrichtung und eine Spannungsversorgungseinheit zum Abgreifen einer Versorgungswechselspannung von einem elektrischen Versorgungsnetz. Mit der Versorgungswechselspannung wird das Haushaltsgerät versorgt. Die Steuereinrichtung ist dazu ausgelegt, die Frequenz der Versorgungswechselspannung zu erfassen und abhängig von dem jeweils aktuellen Wert der Frequenz vorbestimmte Vorgänge in dem Haushaltsgerät zu bewirken.

Demnach wird der erfindungsgemäße Effekt dadurch erzielt, dass die Steuereinrichtung die Frequenz der Versorgungswechselspannung des elektrischen Versorgungsnetzes erfassen, analysieren und die Prozesse des Haushaltsgeräts abhängig von der Analyse der Frequenz steuern kann. Die Erfindung macht sich somit die Tatsache zu Nutze, dass die Frequenz der Versorgungswechselspannung ein Maß für einen Belastungszustand des öffentlichen elektrischen Versorgungsnetzes darstellt. Die Steuereinrichtung kann somit abhängig von der Frequenz der Versorgungswechselspannung auf den Belastungszustand des Versorgungsnetzes zurückschließen. Auf diesem Wege kann die Steuereinrichtung die Prozesse des Haushaltsgeräts derart steuern, dass das öffentliche elektrische Versorgungsnetz durch das Haushaltsgerät nicht überlastet wird. Das Haushaltsgerät kommt dabei ohne eine Datenkommunikation aus, wie sie im Stand der Technik eingesetzt wird. Es ist bei dem erfindungsgemäßen Haushaltsgerät kein externes Messgerät erforderlich, welches im Stand der Technik die Gesamtleitungsaufnahme mehrerer im Haushalt befindlicher Haushaltsgeräte misst und Daten betreffend diese Gesamtleistungsaufnahme an die Haushaltsgeräte überträgt. Gegenüber dem Stand der Technik ermöglicht das erfindungsgemäße Haushaltsgerät die Entlastung des öffentlichen elektrischen Versorgungsnetzes ohne viel Aufwand, nämlich durch einfache Erfassung und Analyse der Frequenz der Versorgungswechselspannung. Es muss lediglich die Frequenz der Versorgungswechselspannung gemessen und durch die Steuereinrichtung ausgewertet werden.

Unter einem Haushaltsgerät wird vorliegend ein Gerät verstanden, dass zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühlgefrierkombination oder ein Klimagerät. Das kann aber auch ein Haushaltskleingerät sein, wie beispielsweise ein Kaffeevollautomat, eine Küchenmaschine oder ein Gerät zur Warmwasserbereitung.

Unter der Spannungsversorgungseinheit wird hier eine Einrichtung verstanden, die die Versorgungswechselspannung vom elektrischen Versorgungsnetz abgreift. Die Spannungsversorgungseinheit kann zum Beispiel ein Netzteil - beispielsweise ein Schaltnetzteil - umfassen, welches die Versorgungswechselspannung in eine Betriebsgleichspannung für die Steuereinrichtung umwandelt. Die Spannungsversorgungseinheit kann auch die abgegriffene Versorgungswechselspannung oder eine davon abgeleitete Wechselspannung an einem Ausgang bereitstellen; dann kann ein elektrischer Verbraucher mit der Versorgungswechselspannung oder mit der abgeleiteten Wechselspannung versorgt werden. Also stellt die Spannungsversorgungseinheit vorliegend eine Schaltungsanordnung dar, welche zum Versorgen des Haushaltsgeräts mit elektrischer Energie ausgebildet ist.

Bezüglich der Messung der Frequenz der Versorgungswechselspannung sind unterschiedliche Vorgehensweisen sinnvoll möglich. Zum Beispiel kann die Steuereinrichtung einen Frequenzmesser umfassen, welcher die Frequenz der Versorgungswechselspannung misst und Messwerte für die Frequenz an eine Steuereinheit - beispielsweise einen Mikrokontroller - der Steuereinrichtung übermittelt. Es kann jedoch auch vorgesehen sein, dass der Mikrokontroller selbst zum Messen der Frequenz der Versorgungswechselspannung ausgebildet ist. Dann kann der Mikrokontroller die Versorgungswechselspannung von der Spannungsversorgungseinheit abgreifen - zum Beispiel über einen Spannungsteiler - und die Frequenz der Versorgungswechselspannung selbst messen. Dies kann zum Beispiel durch Messung der Nulldurchgänge der Versorgungswechselspannung erfolgen. Es ist unerheblich, wie die Frequenz der Versorgungswechselspannung gemessen wird; wichtig ist nur, dass die Steuereinrichtung die Messwerte für die Frequenz erfasst, analysiert und das Haushaltsgerät abhängig von der Analyse steuert beziehungsweise auf den Belastungszustand des Versorgungsnetzes zurückschließt.

Wie bereits ausgeführt, kann die Steuereinrichtung abhängig von dem jeweils aktuellen Wert der Frequenz vorbestimmte Vorgänge in dem Haushaltsgerät bewirken. Zum Beispiel kann das Haushaltsgerät einen elektrischen Verbraucher aufweisen, und die Steuereinrichtung kann den elektrischen Verbraucher unter Berücksichtigung des jeweils aktuellen Wertes der Frequenz der Versorgungswechselspannung ansteuern. Durch entsprechende Ansteuerung des elektrischen Verbrauchers - zum Beispiel durch Abschalten des elektrischen Verbrauchers oder durch Reduktion der an den Verbraucher abgegebenen elektrischen Leistung - kann das elektrische Versorgungsnetz entlastet werden. Also kann die Ansteuerung eines elektrischen Verbrauchers ein Vorgang sein, welcher abhängig von dem jeweils aktuellen Wert der Frequenz bewirkt wird.

Liegt die Frequenz der Versorgungswechselspannung unterhalb eines vorbestimmten Grenzwerts, so ist dies ein Zeichen dafür, dass das elektrische Versorgungsnetz überlastet ist. Es ist somit in einer Ausführungsform vorgesehen, dass die Steuereinrichtung einen Betrieb des elektrischen Verbrauchers dann zeitlich aufteilt, wenn der aktuelle Wert der Frequenz den vorbestimmten Grenzwert unterschreitet. Es sind diesbezüglich unterschiedliche Ausführungsformen vorgesehen.

Zum einen kann die Steuereinrichtung einen Zeitpunkt einer bevorstehenden Inbetriebnahme des elektrischen Verbrauchers dann aufschieben, wenn der aktuelle Wert der Frequenz unterhalb des vorbestimmten Grenzwertes liegt. Hierdurch wird vermieden, dass ein bereits überlastetes elektrisches Versorgungsnetz zusätzlich noch durch die Inbetriebnahme des elektrischen Verbrauchers belastet wird. Es kann also eine zusätzliche Belastung eines bereits ausgelasteten Versorgungsnetzes vermieden werden. Dies kann in einem solchen Ablauf umgesetzt werden: Eine Waschmaschine verfügt über eine Steuereinrichtung, die einen Mikrocontroller sowie einen Frequenzmesser aufweist. Während eines Waschprozesses misst der Frequenzmesser die Frequenz der Versorgungswechselspannung, die von einem elektrischen Versorgungsnetz bereitgestellt wird. Die Messwerte für die Frequenz übermittelt der Frequenzmesser an den Mikrocontroller. Der Mikrocontroller überwacht die Frequenz und überprüft, ob der jeweils augenblickliche Wert der Frequenz unterhalb eines vorbestimmten Grenzwerts liegt oder nicht. Der Mikrocontroller soll in zwei Minuten einen Schleuderbetrieb einleiten, in welchem ein Antriebsmotor der Waschmaschine bei hohen Drehzahlen betrieben wird. Der Mikrocontroller stellt fest, dass die Frequenz der Versorgungswechselspannung den vorbestimmten Grenzwert unterschritten hat. Der Wert der Frequenz liegt also unterhalb des vorbestimmten Grenzwerts. Aus diesem Grund schiebt der Mikrocontroller den Zeitpunkt des Einleitens des Schleuderbetriebs und somit den Zeitpunkt der Inbetriebnahme des Antriebsmotors auf; der Schleuderbetrieb soll beispielsweise in fünf Minuten eingeleitet werden.

Bei dieser Ausführungsform kann vorgesehen sein, dass Daten in der Steuereinrichtung abgelegt sind, die Informationen über ein maximal mögliches Zeitintervall beinhalten, um welches der Zeitpunkt der Inbetriebnahme des elektrischen Verbrauchers aufgeschoben werden kann. Insbesondere ist dieses maximal mögliche Zeitintervall davon abhängig, in welchem Betriebszustand sich das Haushaltsgerät befindet, d.h. das maximal mögliche Zeitintervall kann je nach aktuellem Betriebszustand des Haushaltsgerätes verschieden sein. Dann wird gewährleistet, dass einerseits eine Überlastung des Versorgungsnetzes vermieden und andererseits der Betrieb des Haushaltgeräts nicht beeinträchtigt wird, nämlich beispielsweise ein bereits begonnenes Programm des Haushaltsgeräts ordnungsgemäß abgeschlossen wird. Ist der elektrische Verbraucher ein Kompressor in einem Kältegerät, so wird durch das Festlegen des Zeitintervalls die Aufrechterhaltung der Temperatur in dem Kältegerät gewährleistet, ohne das elektrische Versorgungsnetz zu überlasten. Es kann auch vorgesehen sein, dass unterschiedlichen Programmen und/oder unterschiedlichen Programmabschnitten eines bestimmten Programms des Haushaltsgeräts jeweils ein unterschiedliches Zeitintervall zugeordnet ist, um welches die Inbetriebnahme des elektrischen Verbrauchers zeitlich aufgeschoben werden kann. Beim Festlegen der Zeitintervalle werden bevorzugt gerätespezifische Parameter berücksichtigt. Zum Beispiel muss bei einem Kältegerät die Temperatur berücksichtigt werden; das Zeitintervall kann hier nicht zu lang gewählt werden, um die Soll-Temperatur im Kältegerät aufrecht zu erhalten. Entsprechend muss bei einer Waschmaschine der Umstand berücksichtigt werden, dass ein Schleuderbetrieb oder auch ein Aufheizen von Wasser nicht beliebig aufgeschoben werden können. Die Zeitintervalle können also gerätespezifisch sowie abhängig von dem entsprechenden Verbraucher, dessen Inbetriebnahme aufgeschoben wird, vordefiniert werden.

Zum anderen kann die Steuereinrichtung einen Betrieb des elektrischen Verbrauchers dann anhalten oder eine an den elektrischen Verbraucher abgegebene Leistung reduzieren, wenn während des Betriebs die Frequenz der Versorgungswechselspannung den vorbestimmten Grenzwert unterschreitet. Somit kann auch im Betrieb des elektrischen Verbrauchers gewährleistet werden, dass das elektrische Versorgungsnetz durch eine zu hohe aufgenommene Leistung nicht überlastet wird. Wird während des Betriebes des elektrischen Verbrauchers festgestellt, dass das elektrische Versorgungsnetz überlastet ist, so kann der elektrische Verbraucher abgeschaltet oder die an den Verbraucher abgegebene Leistung reduziert werden. Dies kann zum Beispiel so gestaltet werden: Es wird Wasser in einer Geschirrspülmaschine mit Hilfe einer Heizung aufgeheizt. Ein Mikrocontroller steuert die Heizung an, nämlich unter Ausgabe entsprechender Steuersignale. Der Mikrocontroller stellt fest, dass während des Aufheizens des Wassers die Frequenz der Versorgungswechselspannung einen vordefinierten Grenzwert unterschritten hat und das elektrische Versorgungsnetz überlastet ist. Der Mikrocontroller schaltet nun die Heizung ab oder reduziert die an die Heizung abgegebene Leistung. Zum Beispiel kann hier die Heizstufe reduziert werden.

Also ist das Unterschreiten eines vorbestimmten Grenzwerts durch die Frequenz ein Zeichen dafür, dass das elektrische Versorgungsnetz überlastet ist. Wird das elektrische Versorgungsnetz entlastet, so macht es sich dadurch bemerkbar, dass die Frequenz der Versorgungswechselspannung wieder ansteigt. In einer Ausführungsform ist vorgesehen, dass die Steuereinrichtung einen aufgrund des überlasteten Versorgungsnetzes angehaltenen bzw. unterbrochenen Betrieb des elektrischen Verbrauchers dann weiter fortsetzt, wenn die Frequenz der Versorgungswechselspannung wieder den vorbestimmten Grenzwert überschreitet. Hierdurch wird der elektrische Verbraucher nach dem Entlastetwerden des elektrischen Versorgungsnetzes rasch wieder in Betrieb genommen, und ein zuvor unterbrochener Betrieb des Haushaltsgeräts kann rasch und bestimmungsgemäß abgeschlossen werden. Der zuvor unterbrochene Betrieb wird bevorzugt an derselben Stelle fortgesetzt, an welcher er unterbrochen wurde.

Wie bereits ausgeführt, kann ein Zeitpunkt einer bevorstehenden Inbetriebnahme des elektrischen Verbrauchers aufgeschoben werden, nämlich wenn der aktuelle Wert der Frequenz unterhalb des vorbestimmten Grenzwerts liegt. Es kann aber auch vorkommen, dass das elektrische Versorgungsnetz zu einem bestimmten Zeitpunkt besonders entlastet ist, zum Beispiel nachts. Dann steigt die Frequenz der Versorgungswechselspannung an. Diese Beziehung kann genutzt werden, indem die Steuereinrichtung einen Zeitpunkt einer bevorstehenden Inbetriebnahme des elektrischen Verbrauchers dann vorverlegt, wenn der aktuelle Wert der Frequenz innerhalb eines vorbestimmten Wertebereichs liegt, insbesondere einen vorbestimmten Schwellwert überschreitet. Diese Ausführungsform erweist sich insbesondere bei solchen Haushaltsgeräten besonders vorteilhaft, deren Prozesse relativ flexibel gestaltet werden können. Ein Beispiel dafür sind Kältegeräte, bei denen - bedingt durch gute Isolierung - die Temperatur relativ langsam ansteigt. Hierdurch kann die Inbetriebnahme eines Kompressors in einem relativ breiten Zeitfenster verschoben werden. Diese Ausführungsform kann beispielsweise in einem solchen Szenario umgesetzt werden: Eine Steuereinrichtung eines Kältegeräts soll um 8 Uhr morgens einen Kompressor in Betrieb nehmen, um eine bestimmte Temperatur im Kältegerät aufrecht zu erhalten. Um 7 Uhr stellt die Steuereinrichtung fest, dass die Frequenz der Versorgungswechselspannung einen vorbestimmten Schwellwert überschritten hat. Die Steuereinrichtung erkennt also, dass das elektrische Versorgungsnetz entlastet ist. Dieser Belastungszustand des Versorgungsnetzes kann sich innerhalb der nächsten Stunde deutlich ändern, das Versorgungsnetz kann bereits um 8 Uhr überlastet werden. Aus diesem Grund verlegt die Steuereinrichtung die Inbetriebnahme des Kompressors vor und schaltet den Kompressor sofort ein. Also wird der Kompressor nicht um 8 Uhr, sondern um 7 Uhr in Betrieb genommen. Ein anderes Beispiel ist ein Warmwasserbereiter in Form eines Boilers, bei dem die Aufheizung des Wassers beispielsweise von den Morgenstunden in die Nachtstunden verlegt wird, in denen das elektrische Versorgungsnetz entlastet ist und darüber hinaus ein günstiger Nachtstromtarif vorliegt.

Bei einem erfindungsgemäßen Verfahren zum Betreiben eines Haushaltsgeräts wird selbiges Haushaltsgerät mit einer Versorgungswechselspannung eines elektrischen Versorgungsnetzes versorgt. Bei dem Verfahren wird die Frequenz der Versorgungswechselspannung durch eine Steuereinrichtung des Haushaltsgeräts erfasst, und abhängig von der erfassten Frequenz werden vorbestimmte Vorgänge durch die Steuereinrichtung bewirkt.

Die mit Bezug auf das erfindungsgemäße Haushaltsgerät vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
Fig. 1 in schematischer Darstellung ein Haushaltgerät gemäß einer Ausführungsform der Erfindung; und
Fig. 2 einen beispielhaften Verlauf einer Frequenz einer Versorgungswechselspannung über der Zeit sowie einen zeitlichen Verlauf einer durch einen elektrischen Verbraucher des Haushaltsgeräts aufgenommenen Leistung.

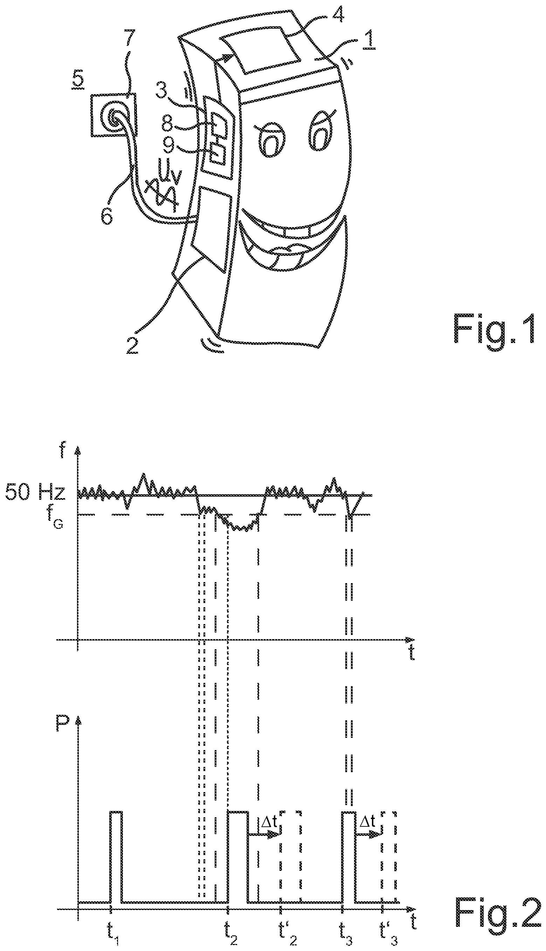

Ein in Fig. 1 dargestelltes Haushaltsgerät 1 ist ein Kältegerät. Das Kältegerät 1 umfasst eine Spannungsversorgungseinheit 2 sowie eine Steuereinrichtung 3. Die Spannungsversorgungseinheit 2 kann zum Beispiel ein Netzteil umfassen. Das Kältegerät 1 umfasst außerdem einen Kompressor 4, der elektrischer Verbraucher ist.

Das Kältegerät 1 ist an ein elektrisches Versorgungsnetz 5 angeschlossen, nämlich über ein Kabel 6 und eine Steckdose 7. Die Spannungsversorgungseinheit 2 greift eine Versorgungswechselspannung Uᵥ von dem Versorgungsnetz 5 ab. Die Spannungsversorgungseinheit 2 wandelt die Versorgungswechselspannung Uᵥ in eine Betriebsgleichspannung, mit welcher die Steuereinrichtung 3 versorgt wird. Die Spannungsversorgungseinheit 2 stellt auch die abgegriffene Versorgungswechselspannung Uᵥ oder eine davon abgeleitete elektrische Spannung für den Kompressor 4 bereit.

Die Steuereinrichtung 3 umfasst eine Steuereinheit 8 sowie einen Frequenzmesser 9. Die Steuereinheit 8 kann ein Mikrocontroller sein, der Frequenzmesser 9 misst die Frequenz f der Versorgungswechselspannung Uᵥ des Versorgungsnetzes 5. Die Messwerte für die Frequenz f übermittelt der Frequenzmesser 9 an die Steuereinheit 8. Die Steuereinheit 8 steuert den Kompressor 4 unter Berücksichtigung der Messwerte für die Frequenz f an.

Abhängig von den Messwerten für die Frequenz f der Versorgungswechselspannung Uᵥ kann die Steuereinheit 8 auf einen Belastungszustand des Versorgungsnetzes 5 zurückschließen. Es gilt dabei die Beziehung, dass je höher die Auslastung des Versorgungsnetzes 5 ist, desto geringer die Frequenz f der Versorgungswechselspannung Uᵥ ist.

Die Steuereinheit 8 kann einen Zeitpunkt der Inbetriebnahme des Kompressors 4 abhängig von den Messwerten für die Frequenz f verschieben, nämlich vorverlegen oder aufschieben. Sowohl für das Aufschieben als auch für das Vorverlegen ist in der Steuereinrichtung 3 ein Zeitintervall vordefiniert, um welches die Inbetriebnahme des Kompressors 4 zeitlich vorverlegt bzw. aufgeschoben werden kann. Und zwar sind in der Steuereinrichtung 3 - zum Beispiel in einem Speicher - Daten abgelegt, die Informationen über ein erstes Zeitintervall umfassen, um welches die Inbetriebnahme des Kompressors 4 zeitlich aufgeschoben werden kann, wie auch Informationen über ein zweites Zeitintervall beinhalten, um welches die Inbetriebnahme des Kompressors 4 zeitlich vorverlegt werden kann. Die Steuereinheit 8 kann eine bevorstehende Inbetriebnahme des Kompressors 4 dann zeitlich aufschieben, wenn die Messwerte für die Frequenz f unterhalb eines vorbestimmten Grenzwerts f_{G} liegen. In der Steuereinrichtung 3 sind also außerdem solche Daten abgelegt, die den Grenzwert für die Frequenz f definieren.

Außerdem kann die Steuereinheit eine bevorstehende Inbetriebnahme des Kompressors 4 dann zeitlich vorverlegen, wenn die Messwerte für die Frequenz f oberhalb eines vorbestimmten Schwellwerts liegen. Dazu sind in der Steuereinrichtung 3 Daten abgelegt, die Informationen über den Schwellwert beinhalten.

Bezugnehmend auf Fig. 2 wird nun ein Verfahren gemäß einer Ausführungsform der Erfindung näher erläutert. In ihrem oberen Teil zeigt Fig. 2 einen beispielhaften Verlauf der Frequenz f der Versorgungswechselspannung Uᵥ über der Zeit t. Auf der y-Achse ist ein Soll-Wert der Frequenz f aufgetragen, nämlich 50 Hz. Auf der y-Achse ist außerdem der Grenzwert f_{G} aufgetragen, der beispielsweise 49,5 Hz betragen kann.

In ihrem unteren Teil stellt Fig. 2 einen Verlauf der durch den Kompressor 4 aufgenommenen Leistung P über der Zeit t. Der Kompressor 4 soll zunächst zu einem ersten Zeitpunkt t₁ in Betrieb genommen werden, dann zu einem zweiten Zeitpunkt t₂ und später noch zu einem Zeitpunkt t₃. Wie bereits ausgeführt, kann die Steuereinheit 8 die Inbetriebnahme des Kompressors 4 um ein Zeitintervall Δt zeitlich aufschieben, nämlich dann, wenn die Frequenz f unterhalb des Grenzwertes f_{G} liegt. Zum Zeitpunkt t₁ stellt die Steuereinheit 8 fest, dass die Frequenz f um den Soll-Wert von 50 Hz liegt, den Grenzwert f_{G} also nicht unterschreitet. Somit nimmt die Steuereinheit 8 den Kompressor 4 zum Zeitpunkt t₁ in Betrieb.

Kurz vor dem Zeitpunkt t₂ stellt die Steuereinheit 8 fest, dass sich die Frequenz f dem Grenzwert f_{G} nähert. Noch vor dem Zeitpunkt t₂ unterschreitet die Frequenz f den Grenzwert f_{G}. Aus diesem Grund nimmt die Steuereinheit 8 den Kompressor 4 zum Zeitpunkt t₂ nicht in Betrieb, sondern verschiebt die Inbetriebnahme des Kompressors 4 auf einen späteren Zeitpunkt, nämlich auf t'₂. Vor dem Zeitpunkt t'₂ stellt die Steuereinheit 8 fest, dass die Frequenz f den Grenzwert f_{G} wieder überschritten hat, und die Steuereinheit 8 kann den Kompressor 4 in Betrieb nehmen. Die Inbetriebnahme des Kompressors 4 erfolgt also zum Zeitpunkt t'₂.

Die Steuereinheit kann den Betrieb des Kompressors 4 auch dann unterbrechen, wenn während des Betriebs des Kompressors 4 die Frequenz f den Grenzwert f_{G} unterschreitet. Zum Zeitpunkt t₃ nimmt die Steuereinheit 8 den Kompressor 4 in Betrieb. Kurz danach bricht jedoch die Frequenz f der Versorgungswechselspannung U_{V} ein und unterschreitet den Grenzwert f_{G}. Gleichzeitig unterbricht die Steuereinheit 8 den Betrieb des Kompressors 4 und schiebt die weitere Inbetriebnahme des Kompressors 4 um das Zeitintervall Δt auf. Der Kompressor 4 wird zu einem weiteren Zeitpunkt t'₃ in Betrieb genommen; der Betrieb kann hier neu gestartet werden oder er kann an der Stelle fortgesetzt werden, an welcher er zuvor unterbrochen wurde. Hier kann auch vorgesehen sein, dass der Kompressor 4 unmittelbar - also früher als zum Zeitpunkt t'₃ - dann wieder in Betrieb genommen wird, wenn die Frequenz f den Grenzwert f_{G} wieder überschreitet.

Insgesamt werden ein Haushaltsgerät 1 sowie ein Verfahren geschaffen, die eine Entlastung eines elektrischen Versorgungsnetzes 5 gewährleisten. Ein Frequenzmesser 9 misst die Frequenz f der Versorgungswechselspannung U_{V}, und die Steuereinheit 8 steuert den Kompressor 4 abhängig von den Messwerten für die Frequenz f. Unterschreitet die Frequenz f einen vorbestimmten Grenzwert f_{G}, so ist dies ein Zeichen dafür, dass das elektrische Versorgungsnetz 5 überlastet ist. Aus diesem Grund kann die Steuereinheit 8 die Inbetriebnahme des Kompressors 4 zeitlich verschieben, um ein bereits ausgelastetes Versorgungsnetz 5 nicht weiter zu überlasten.

### Bezugszeichenliste

- 1: Kältegerät
- 2: Spannungsversorgungseinheit
- 3: Steuereinrichtung
- 4: Kompressor
- 5: Versorgungsnetz
- 6: Kabel
- 7: Steckdose
- 8: Steuereinheit
- 9: Frequenzmesser

- f: Frequenz
- f_{G}: Grenzwert
- P: Leistung
- t: Zeit
- t₁, t₂, t'₂, t₃, t'₃: Zeitpunkt
- Uᵥ: Versorgungswechselspannung

## Patentansprüche

1. Haushaltsgerät (1) mit einer Steuereinrichtung (3) und mit einer Spannungsversorgungseinheit (2) zum Abgreifen einer Versorgungswechselspannung (U_{V}) von einem elektrischen Versorgungsnetz (5), mit welcher das Haushaltsgerät (1) versorgbar ist, und mit zumindest einem elektrischen Verbraucher (4),
**dadurch gekennzeichnet, dass**
die Steuereinrichtung (3) dazu ausgelegt ist, die Frequenz (f) der Versorgungswechselspannung (U_{V}) zu erfassen und abhängig von dem jeweils aktuellen Wert der Frequenz (f) vorbestimmte Vorgänge in dem Haushaltsgerät (1) zu bewirken, wobei die Steuereinrichtung (3) dazu ausgelegt ist, den zumindest einen elektrischen Verbraucher (4) unter Berücksichtigung des jeweils aktuellen Wertes der Frequenz (f) der Versorgungswechselspannung (U_{V}) anzusteuern, und wobei die Steuereinrichtung (3) dazu ausgelegt ist, einen Zeitpunkt (t₁, t₂, t₃) einer bevorstehenden Inbetriebnahme des elektrischen Verbrauchers (4) dann vorzuverlegen, wenn der aktuelle Wert der Frequenz (f) innerhalb eines vorbestimmten Wertebereichs liegt, das heißt einen vorbestimmten Sollwert überschreitet.

2. Haushaltsgerät (1) nach Anspruch 1, **dadurch gekennzeichnet, dass** die Steuereinrichtung (3) dazu ausgelegt ist, einen Zeitpunkt (t₁, t₂, t₃) einer bevorstehenden Inbetriebnahme des elektrischen Verbrauchers (4) dann aufzuschieben, wenn der aktuelle Wert der Frequenz (f) unterhalb eines Grenzwertes (f_{G}) liegt.

3. Haushaltsgerät (1) nach Anspruch 2, **dadurch gekennzeichnet, dass** Daten in der Steuereinrichtung (3) abgelegt sind, durch welche ein maximal mögliches Zeitintervall (Δt) bestimmt ist, um welches die Inbetriebnahme des elektrischen Verbrauchers (4) aufschiebbar ist.

4. Haushaltsgerät (1) nach einem der Ansprüche 1 bis 3, **dadurch gekennzeichnet, dass** die Steuereinrichtung (3) dazu ausgelegt ist, eine an den elektrischen Verbraucher (4) abgegebene Leistung (P) dann zu reduzieren, insbesondere einen Betrieb des elektrischen Verbrauchers (4) dann anzuhalten, wenn während des Betriebs die Frequenz (f) einen vorbestimmten Grenzwert (f_{G}) unterschreitet.

5. Haushaltsgerät (1) nach Anspruch 4, **dadurch gekennzeichnet, dass** die Steuereinrichtung (3) dazu ausgelegt ist, die an den Verbraucher (4) abgegebene Leistung (P) dann wieder zu erhöhen, insbesondere den aufgrund eines Unterschreitens des vorbestimmten Grenzwertes (f_{G}) durch die Frequenz (f) der Versorgungswechselspannung (U_{V}) angehaltenen Betrieb des elektrischen Verbrauchers (4) dann fortzusetzen, wenn die Frequenz (f) wieder den Grenzwert (f_{G}) überschreitet.

6. Verfahren zum Betreiben eines Haushaltsgeräts (1), welches mit einer Versorgungswechselspannung (U_{V}) eines elektrischen Versorgungsnetzes (5) versorgt wird, **gekennzeichnet durch folgende Schritte:**
- Erfassen der Frequenz (f) der Versorgungswechselspannung (U_{V}) durch eine Steuereinrichtung (3) des Haushaltsgeräts (1) und
- Ansteuern eines elektrischen Verbrauchers (4) des Haushaltsgerätes (1) durch die Steuereinrichtung (3) abhängig von der erfassten Frequenz (f),
wobei die Steuereinrichtung (3) einen Zeitpunkt (t₁, t₂, t₃) einer bevorstehenden Inbetriebnahme des elektrischen Verbrauchers (4) dann vorverlegt, wenn der aktuelle Wert der Frequenz (f) innerhalb eines vorbestimmten Wertebereichs liegt, das heißt einen vorbestimmten Sollwert überschreitet.

7. Verfahren nach Anspruch 6, **dadurch gekennzeichnet, dass** die Steuereinrichtung (3) einen Zeitpunkt (t₁, t₂, t₃) einer bevorstehenden Inbetriebnahme des elektrischen Verbrauchers (4) dann aufschiebt, wenn der aktuelle Wert der Frequenz (f) unterhalb eines Grenzwertes (f_{G}) liegt..

8. Verfahren nach Anspruch 7, **dadurch gekennzeichnet, dass** die Steuereinrichtung (3) den Zeitpunkt (t₁, t₂, t₃) der Inbetriebnahme des elektrischen Verbrauchers (4) maximal um ein vordefiniertes Zeitintervall (Δt) aufschiebt.

9. Verfahren nach einem der Ansprüche 6 bis 8, **dadurch gekennzeichnet, dass** die Steuereinrichtung (3) eine an den elektrischen Verbraucher (4) abgegebene Leistung (P) dann reduziert, insbesondere einen Betrieb des elektrischen Verbrauchers (4) dann anhält, wenn während des Betriebs die Frequenz (f) einen vorbestimmten Schwellwert unterschreitet.

10. Verfahren nach Anspruch 9, **dadurch gekennzeichnet, dass** die Steuereinrichtung (3) die an den elektrischen Verbraucher (4) abgegebene Leistung (P) dann wieder erhöht, insbesondere den aufgrund eines Unterschreitens des vorbestimmten Grenzwertes (f_{G}) durch die Frequenz (f) der Versorgungswechselspannung (U_{V}) angehaltenen Betrieb des elektrischen Verbrauchers (4) dann fortsetzt, wenn die Frequenz (f) wieder den Grenzwert (f_{G}) überschreitet.

## Claims

1. Domestic appliance (1) with a control facility (3) and with a voltage supply unit (2) for tapping a supply alternating voltage (Uv) of an electrical supply network (5), by which the domestic appliance (1) can be supplied, and with at least one electrical consumer (4),
**characterised in that**
the control facility (3) is designed to record the frequency (f) of the supply alternating voltage (U_{V}) and, as a function of the respective current value of the frequency (f), to effect predefined procedures in the domestic appliance (1), wherein the control facility (3) is designed to actuate the at least one electrical consumer (4) while taking into consideration the respective current value of the frequency (f) of the supply alternating voltage (U_{V}), and wherein the control facility (3) is designed to bring forward a point in time (t₁, t₂, t₃) of an imminent commissioning of the electrical consumer (4) if the current value of the frequency (f) lies within a predefined value range, i.e. exceeds a predefined target value.

2. Domestic appliance (1) according to claim 1, **characterised in that** the control facility (3) is designed to delay a point in time (t₁, t₂, t₃) of an imminent commissioning of the electrical consumer (4) if the current value of the frequency (f) lies below a limit value (f_{G}).

3. Domestic appliance (1) according to claim 2, **characterised in that** data used to determine a maximum possible time interval (Δt) by which the commissioning of the electrical consumer (4) can be delayed is stored in the control facility (3).

4. Domestic appliance (1) according to one of claims 1 to 3, **characterised in that** the control facility (3) is designed to reduce a power (P) output to the electrical consumer (4), in particular to stop an operation of the electrical consumer (4), if the frequency (f) falls below a predefined limit value (f_{G}) during the operation.

5. Domestic appliance (1) according to claim 4, **characterised in that** the control facility (3) is designed to increase the power (P) output to the consumer (4) once more, in particular to continue the operation of the electrical consumer (4) stopped due to the frequency (f) of the supply alternating voltage (Uv) falling below the predefined limit value (f_{G}), if the frequency (f) exceeds the limit value (f_{G}) once more.

6. Method for operating a domestic appliance (1), which is supplied by a supply alternating voltage (U_{V}) of an electrical supply network (5), **characterised by the following steps:**
- recording the frequency (f) of the supply alternating voltage (Uv) by a control facility (3) of the domestic appliance (1) and
- actuating an electrical consumer (4) of the domestic appliance (1) by the control facility (3) as a function of the recorded frequency (f),
wherein the control facility (3) brings forward a point in time (t₁, t₂, t₃) of an imminent commissioning of the electrical consumer (4) if the current value of the frequency (f) lies within a predefined value range, i.e. exceeds a predefined target value.

7. Method according to claim 6, **characterised in that** the control facility (3) delays a point in time (t₁, t₂, t₃) of an imminent commissioning of the electrical consumer (4) if the current value of the frequency (f) lies below a limit value (f_{G}).

8. Method according to claim 7, **characterised in that** the control facility (3) delays the point in time (t₁, t₂, t₃) of the commissioning of the electrical consumer (4) at most by a predefined time interval (Δt).

9. Method according to one of claims 6 to 8, **characterised in that** the control facility (3) reduces a power (P) output to the electrical consumer (4), in particular stops an operation of the electrical consumer (4), if the frequency (f) falls below a predefined limit value (f_{G}) during the operation.

10. Method according to claim 9, **characterised in that** the control facility (3) increases the power (P) output to the electrical consumer (4) once more, in particular continues the operation of the electrical consumer (4) stopped due to the frequency (f) of the supply alternating voltage (Uv) falling below the predefined limit value (f_{G}), if the frequency (f) exceeds the limit value (f_{G}) once more.

## Revendications

1. Appareil ménager (1) comprenant un dispositif de commande (3) et une unité d'alimentation en tension (2) destinée à prélever une tension d'alimentation alternative (U_{V}) à partir d'un réseau électrique (5), avec laquelle l'appareil ménager (1) peut être alimenté, et comprenant au moins un consommateur électrique (4),
**caractérisé en ce que**
le dispositif de commande (3) est conçu de manière à détecter la fréquence (f) de la tension d'alimentation alternative (U_{V}) et, dépendant de la valeur instantanée respective de la fréquence (f), à déclencher des opérations prédéterminées dans l'appareil ménager (1), le dispositif de commande (3) étant conçu de manière à exciter le au moins un consommateur électrique (4) en tenant compte de la valeur instantanée respective de la fréquence (f) de la tension d'alimentation alternative (U_{V}), et le dispositif de commande (3) étant conçu de manière à anticiper un moment (t₁, t₂, t₃) d'une mise en service imminente du consommateur électrique (4) lorsque la valeur instantanée de la fréquence (f) est comprise dans une plage de valeurs prédéterminée, à savoir lorsqu'elle devient supérieure à une valeur de consigne prédéterminée.

2. Appareil ménager (1) selon la revendication 1, **caractérisé en ce que** le dispositif de commande (3) est conçu de manière à retarder le moment (t₁, t₂, t₃) d'une mise en service imminente du consommateur électrique (4) lorsque la valeur instantanée de la fréquence (f) est inférieure à une valeur limite (f_{G}).

3. Appareil ménager (1) selon la revendication 2, **caractérisé en ce que** des données sont déposées dans le dispositif de commande, au moyen desquelles un intervalle de temps maximal (Δt) est déterminé, dont la mise en service du consommateur électrique (4) peut être retardée.

4. Appareil ménager (1) selon l'une des revendications 1 à 3, **caractérisé en ce que** le dispositif de commande (3) est conçu de manière à réduire une puissance (P) délivrée au consommateur électrique (4), notamment à stopper le fonctionnement du consommateur électrique (4) lorsque, durant le fonctionnement, la fréquence (f) devient inférieure à une valeur limite (f_{G}) prédéterminée.

5. Appareil ménager (1) selon la revendication 4, **caractérisé en ce que** le dispositif de commande (3) est conçu de manière à augmenter à nouveau la puissance (P) délivrée au consommateur (4), notamment à reprendre le fonctionnement interrompu du consommateur électrique (4) en raison de la baisse de la fréquence (f) de la tension d'alimentation alternative (U_{V}) en dessous de la valeur limite (f_{G}) prédéterminée, lorsque la fréquence (f) redevient supérieure à la valeur limite (f_{G}).

6. Procédé de fonctionnement d'un appareil ménager (1) qui est alimenté par une tension d'alimentation alternative (U_{V}) d'un réseau électrique (5), **caractérisé en ce qu'**il comprend les étapes suivantes :
- détection de la fréquence (f) de la tension d'alimentation alternative (U_{V}) par un dispositif de commande (3) de l'appareil ménager (1), et
- excitation d'un consommateur électrique (4) de l'appareil ménager (1) par le dispositif de commande (2) en fonction de la fréquence détectée (f),
dans lequel le dispositif de commande (3) anticipe le moment (t₁, t₂, t₃) d'une mise en service imminente du consommateur électrique (4) lorsque la valeur instantanée de la fréquence (f) est comprise dans une plage de valeurs prédéterminée, à savoir lorsqu'elle devient supérieure à une valeur de consigne prédéterminée.

7. Procédé selon la revendication 6, **caractérisé en ce que** le dispositif de commande (3) retarde le moment (t₁, t₂, t₃) d'une mise en service imminente du consommateur électrique (4) lorsque la valeur instantanée de la fréquence (f) est inférieure à une valeur limite (f_{G}).

8. Procédé selon la revendication 7, **caractérisé en ce que** le dispositif de commande (3) retarde le moment (t₁, t₂, t₃) de la mise en service du consommateur électrique (4) au maximum d'un intervalle de temps (Δt) prédéfini.

9. Procédé selon l'une des revendications 6 à 8, **caractérisé en ce que** le dispositif de commande (3) réduit une puissance (P) délivrée au consommateur électrique (4), notamment stoppe le fonctionnement du consommateur électrique (4) lorsque, pendant le fonctionnement, la fréquence (f) devient inférieure à une valeur de seuil prédéterminée.

10. Procédé selon la revendication 9, **caractérisé en ce que** le dispositif de commande (3), lorsque la fréquence (f) redevient supérieure à la valeur limite (f_{G}), augmente à nouveau la puissance (P) délivrée au consommateur (4) électrique, notamment reprend le fonctionnement interrompu du consommateur électrique (4) en raison de la baisse de la fréquence (f) de la tension d'alimentation alternative (U_{V}) en dessous de la valeur limite (f_{G}) prédéterminée.
